# EUROPEAN PATENT APPLICATION

(11) **EP 3 334 023 A1**
(43) Date of publication of application: **13.06.2018**
(21) Application number: 16202724.7
(22) Date of filing: 07.12.2016
(51) Int. Cl.: H02M 1/32, H02M 7/5387

(54) **IMPROVEMENTS IN OR RELATING TO LINE COMMUTATED CONVERTERS**

(71) Applicant: General Electric Technology GmbH, 5400 Baden (CH)
(72) Inventor: SHE, Xu, Niskayuna, NY New York 12309 (US); BARKER, Carl David, Stone, Stafford ST15 0LN (GB); DAVIDSON, Colin Charnock, Stafford, Staffordshire ST17 4PS (GB)
(74) Representative: Fischer, Michael Maria

(57) **Abstract**

In the field of high voltage direct current (HVDC) power transmission a line commutated converter (10) includes a plurality of converter limbs (12A, 12B, 12C) that extend between first and second DC terminals (16, 18). Each converter limb (12A, 12B, 12C) includes first and second limb portions (22, 24) that are separated by an AC terminal (26). The first limb portions (22) together define a first limb portion group (28) and the second limb portions (24) together define a second limb portion group (30). Each limb portion (22, 24) includes at least one switching element (32) in the form of a latching device (34). Each latching device (34) is configured to turn on and conduct current when it is forward biased and it receives a turn on signal, to naturally turn off and no longer conduct current when it is reverse biased and the current flowing through it falls to zero, and to actively turn off and prevent current from flowing therethrough when it receives a turn off signal. The line commutated converter (10) also includes a control unit (38) that is programmed to control switching of the latching devices (34). The control unit (38), during normal operating conditions, successively sends a first latching device (34) in a respective pair of first and second latching devices (34) in one of the first limb portion group (28) or the second limb portion group (30) a turn on signal whereby the first latching device (34) turns on and begins to conduct current while the current flowing through the second latching device (34) begins to fall to zero and the second latching device prepares to naturally turn off. The control unit (38), in the event of abnormal operating conditions arising, sends a turn off signal to the or each latching device (34) experiencing an abnormal current flow therethrough to actively turn it off and prevent current from flowing therethrough.

## Description

This invention relates to a line commutated converter.

Conventional line commutated converters use switching elements that can only be turned on (not off) by a control signal. Such line commutated converters therefore rely on the line voltage of an AC network to which the converter is, in use, connected to effect the commutation from one switching element to its neighbour. More particularly the switching elements naturally commutate, i.e. naturally turn off and no longer conduct current, under the influence of the associated AC network which reverse biases them and causes the current flowing through them to fall to zero.

According to an aspect of the invention there is provided a line commutated converter, for use in high voltage DC power transmission, comprising:
a plurality of converter limbs extending between first and second DC terminals, each converter limb including first and second limb portions separated by an AC terminal, the first limb portions together defining a first limb portion group and the second limb portions together defining a second limb portion group, each limb portion including at least one switching element in the form of a latching device, each latching device being configured to turn on and conduct current when it is forward biased and it receives a turn on signal, to naturally turn off and no longer conduct current when it is reverse biased and the current flowing through it falls to zero, and to actively turn off and prevent current from flowing therethrough when it receives a turn off signal; and
a control unit programmed to control switching of the latching devices, the control unit during normal operating conditions successively sending a first latching device in a respective pair of first and second latching devices in one of the first limb portion group or the second limb portion group a turn on signal whereby the first latching device turns on and begins to conduct current while the current flowing through the second latching device begins to fall to zero and the second latching device prepares to naturally turn off, and the control unit in the event of abnormal operating conditions arising sending a turn off signal to the or each latching device experiencing an abnormal current flow therethrough to actively turn it off and prevent current from flowing therethrough.

Allowing each second latching device to naturally turn off during successive operating cycles during normal operating conditions, permits the energy stored in the inherent inductance of an AC network with which the line commutated converter of the invention is, in use, associated to similarly dissipate naturally.

Meanwhile, the ability to actively turn off a given latching device, and thereby prevent the flow of current therethrough, when abnormal operating conditions arise and the said given latching device experiences an abnormal current flow therethrough, protects the second latching device from a high and potentially damaging peak current.

Preferably one or more of the latching devices is or includes a gas tube.

Modern gas tubes are able to naturally turn off under appropriate conditions but can also, e.g. in an emergency when abnormal operating conditions arise, be actively turned off upon receipt of a turn off signal.

The abnormal current flow experienced by one or more latching devices may be an unexpected increase in current flow.

In a preferred embodiment of the invention the abnormal current flow is caused by a short-circuit fault occurring across a further latching device.

In another preferred embodiment of the invention the abnormal current flow is caused by a short-circuit fault between the first and second DC terminals.

Optionally the abnormal current flow experienced by one or more latching devices is a flow of current when it should not normally do so.

In a still further preferred embodiment of the invention the abnormal current flow is caused by a commutation failure in the or each latching device experiencing the said abnormal current flow whereby it fails properly to naturally turn off.

The ability of the control unit to control the active turning off of one or more latching devices experiencing an abnormal current flow therethrough in response to a short circuit fault or commutation failure of the type mentioned above, desirably allows the line commutated converter of the invention to handle the resulting abnormal operating conditions and thereafter resume operating normally, e.g. without the need to operate a protective circuit breaker to isolate the converter and the attendant disruption to power transfer that this would entail.

Optionally during a subsequent operating cycle of the or each latching device experiencing an abnormal current flow therethrough the control unit is programmed to allow another attempt to naturally turn off the or each said latching device.

Such programming of the control unit provides the opportunity, by way of a degree of backup protection, to prevent repeated exposure of the or each said latching device to a high peak current and a stressful voltage spike, as well as limiting the extent to which the temperature of the or each said latching device increases.

Preferably each limb portion includes a current detector to identify an abnormal current flow.

Such a feature desirably assists the control unit in determining when abnormal operating conditions have arisen and one or more latching devices are, as a result experiencing an abnormal current flow therethrough.

In a still further preferred embodiment of the invention one or more limb portions additionally includes a surge arrestor electrically connected in parallel across the or each switching element therein.

The inclusion of such surge arresters provides a convenient and reliable way of dissipating any energy stored in the inherent inductance of an associated AC network in the event, e.g. in an emergency, that the control unit has to send a turn off signal to a given latching device and current is prevented from flowing therethrough. In this regard, surge arresters have excellent transient energy absorption capabilities which are able to dissipate energy for single-shot events, such as the abnormal current flows mentioned herein. Surge arresters are not, however, well-suited to absorbing and dissipating energy on a continuous basis and so would not be able to cope with absorbing and dissipating energy during each operating cycle of a converter, e.g. so as to manage the stored energy therein.

There now follows a brief description of preferred embodiments of the invention, by way of non-limiting example, with reference being made to the following figures in which:
Figure 1 shows a schematic view of a line commutated converter according to an embodiment of the invention;
Figures 2(a) and 2(b) illustrate operation of the line commutated converter shown in Figure 1 during normal operating conditions;
Figures 3(a) and 3(b) illustrate operation of the line commutated converter shown in Figure 1 in the event of abnormal current flows arising because of a short-circuit fault occurring across a latching device within the said converter; and
Figure 3(c) shows high peak currents, stressful voltage spikes and increased temperatures the latching devices mentioned in connection with Figures 3(a) and 3(b) could otherwise additionally be repeatedly exposed to.

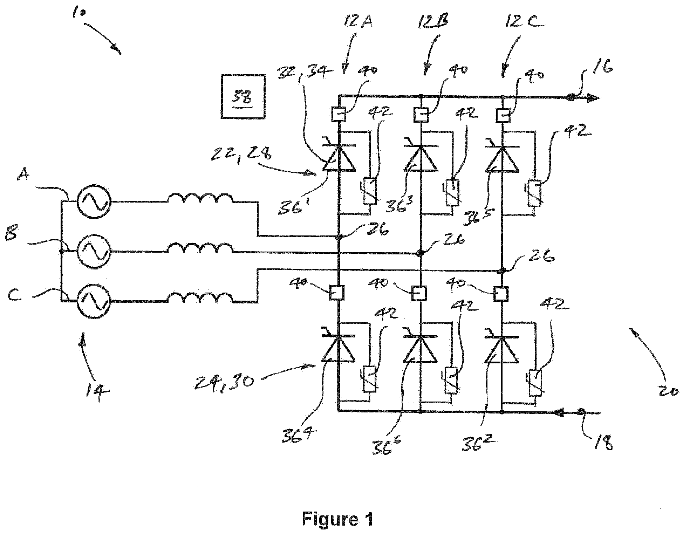

A line commutated converter according to a first embodiment of the invention is designated generally by reference numeral 10, as shown in Figure 1.

The line commutated converter 10 includes three converter limbs 12A, 12B, 12C, each of which corresponds to a respective phase A, B, C of an AC network 14 with which the converter 10 is, in use, operatively connected. Other embodiments of the invention may include fewer than or more than three converter limbs according to the commensurate number of phases included in an associated AC network.

Each converter limb 12A, 12B, 12C extends between first and second DC terminals 16, 18 which, in use, are operatively connected with a DC network 20. Each converter limb 12A, 12B, 12C also includes first and second limb portions 22, 24 which are separated by a corresponding AC terminal 26. The first limb portions 22 together define a first limb portion group 28 and the second limb portions 24 together define a second limb portion group 30.

In the embodiment shown each limb portion 22, 24 includes a single switching element 32 in the form of a latching device 34, although more switching elements may optionally be included in each limb portion 22, 24. Each latching device 34 is a gas tube 36, although other latching devices, such as Integrated Gate-Commutated Thyristors (IGCTs) may also be used. In the foregoing manner the converter 10 includes first, second, third, fourth, fifth and sixth gas tubes 36¹, 36², 36³, 36⁴, 36⁵, 36⁶.

Each latching device 34, i.e. each gas tube 36¹, 36⁴, 36³, 36⁴, 36⁵, 36⁴, is configured to:
(i) turn on and conduct current when it is forward biased and it receives a turn on signal;
(ii) naturally turn off and no longer conduct current when it is reverse biased and the current flowing through it falls to zero; and
(iii) actively turn off and prevent current from flowing therethrough when it receives a turn off signal.

In addition to the foregoing the converter 10 includes a control unit 38 that is programmed to control switching of the latching devices 34, i.e. the gas tubes 36¹, 36², 36³, 36⁴, 36⁵, 36⁶.

Also, each limb portion 22, 24 includes a current detector 40 which is able to both identify when current is flowing through the corresponding first or second limb portion 22, 24 as well as establish the level of current flowing therethrough.

Each limb portion 22, 24 further includes a surge arrester 42 that is connected in parallel across the corresponding switching element 32, i.e. the corresponding gas tube 36¹, 36², 36³, 36⁴, 36⁵, 36⁶.

In use, during normal operating conditions, the control unit 38 successively sends a first latching device 34, i.e. a first gas tube 36¹, 36², 36³, 36⁴, 36⁵, 36⁶, in a respective pair of first and second latching devices 34, i.e. a respective pair of first and second gas tubes 36¹, 36², 36³, 36⁴, 36⁵, 36⁴, in one of the first limb portion group 28 or the second limb portion group 30, a turn on signal whereby the first latching device 34, i.e. the first gas tube 36¹, 36², 36³, 36⁴, 36⁵, 36⁶, turns on and begins to conduct current while the current flowing through the second latching device 34, i.e. the second gas tube 36¹, 36², 36³, 36⁴, 36⁵, 36⁶, begins to fall to zero and the second latching device 34, i.e. the second gas tube 36¹, 36², 36³, 36⁴, 36⁵, 36⁶, prepares to naturally turn off.

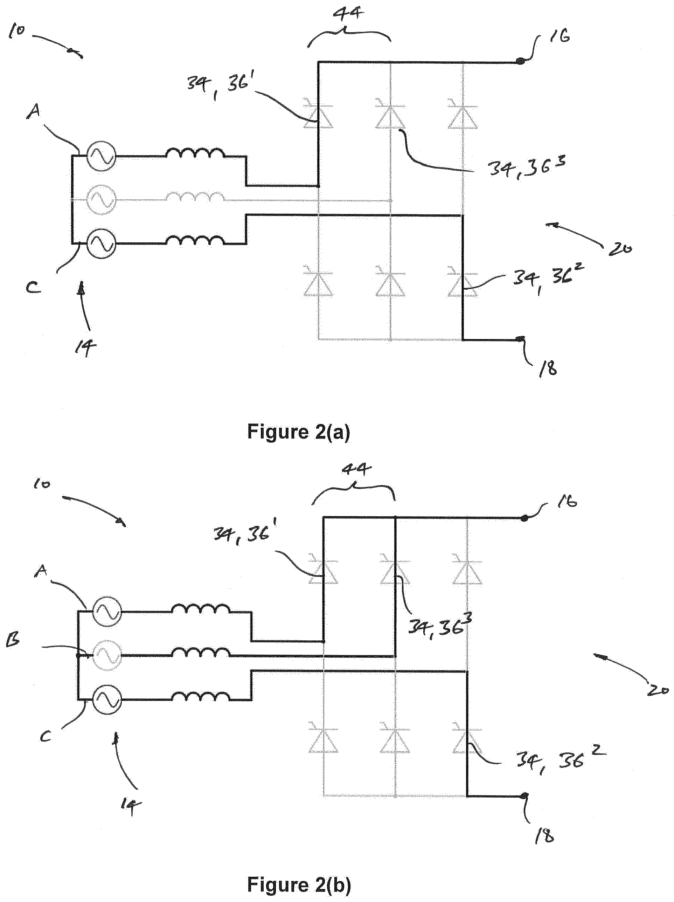

Such control is illustrated, by way of example, with respect to first and third gas tubes 36¹, 36³ in Figures 2(a) and 2(b).

Initially the first gas tube 36¹ in the first limb portion group 28 and the second gas tube 36² in the second limb portion group 30 connect two of the phases A, C of the AC network 14 in series with the DC terminals 16, 18, as shown in Figure 2(a).

Accordingly the first gas tube gas tube 36¹ can be considered the second latching device 34 in a respective pair 44 of first and second latching devices 34 in the first limb portion group 28, with the third gas tube 36³, in this example, being considered the first latching device 34 within the said pair 44.

The control unit 38 then sends the third gas tube gas tube 36³ a turn on signal whereby the third gas tube 36³ turns on and begins to conduct current while the current flowing through the second latching device 34, i.e. the first gas tube 36¹ begins to fall to zero and the first gas tube 36¹ prepares to naturally turn off, as shown in Figure 2(b).

Such steps are repeated, e.g. to transition the connection via the second gas tube 36² in the second limb portion group 30 to the fourth gas tube 36⁴ therein and so on, during continued normal operating conditions.

In the event of abnormal operating conditions arising the control unit 38 is programmed to send a turn off signal to the or each latching device 34 which is experiencing an abnormal current flow therethrough to actively turn it off and prevent current from flowing therethrough.

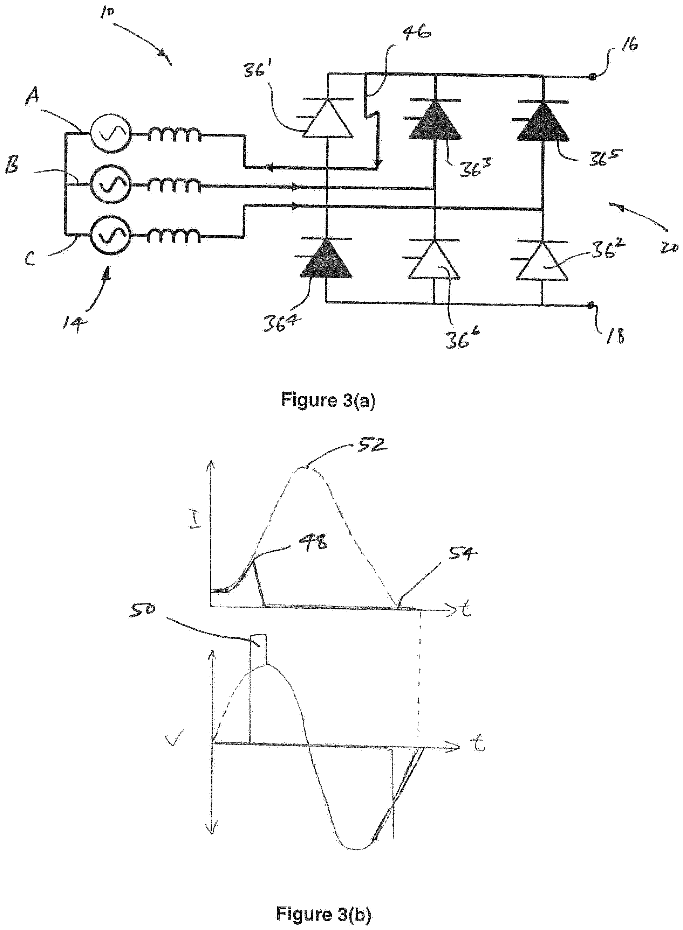

By way of example Figure 3(a) illustrates the situation when the abnormal current flow is caused by a short-circuit fault 46 occurring across a further latching device 34, e.g. across the first gas tube 36¹ in the first limb portion group 28.

As a consequence of such a short-circuit fault 46 occurring, the latching device 34 within the same first limb portion group 28 which is conducting current at the time, e.g. the third gas tube 36³, experiences an abnormal current flow in the form of an unexpected, sharp, increase in current flow. In the embodiment shown this unexpected increase in current flow is identified by the current detector 40 within the corresponding limb portion 22, e.g. because the magnitude of current flowing exceeds an overcurrent threshold, and is reported to the control unit 38.

In other embodiments of the invention the unexpected increase in current flow through a gas tube may instead be identified by a differential protection scheme which is monitoring the respective levels of current in the AC and DC networks. It might also be extrapolated from the identification, e.g. by the current detector therein, of the flow of current in an unexpected place, i.e. within the limb portion in which the aforementioned short circuit has arisen.

The control unit 38 thereby becomes aware that abnormal operating conditions have arisen and that the third gas tube 36³ is experiencing an abnormal current flow therethrough, i.e. an unexpected increase in current flow therethrough, and so the control unit 38 sends a turn off signal to the third gas tube 36³ to actively turn it off 48 and prevent current from flowing therethrough.

Such a step diverts the fault current that otherwise would have continued to flow through the third gas tube 36³ into the corresponding surge arrester 42 within the same first limb portion 22 as the third gas tube 36³ which absorbs 50 and thereby stops the fault current, as shown in Figure 3(b).

In this manner the third gas tube 36³ is protected from a high and potentially damaging peak current 52, as also shown in Figure 3(b), which it would otherwise have been exposed to.

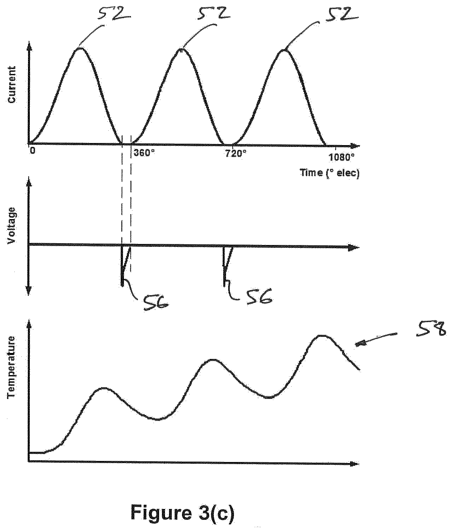

By way of a degree of further backup protection, the control unit 38 is programmed to allow, during a subsequent operating cycle of the third gas tube 36³, i.e. the latching device 34 experiencing an abnormal flow of current therethrough, to allow another attempt 54 to naturally turn off the third gas tube 36³. This provides the opportunity to prevent repeated exposure of the third gas tube 36³ to high peak currents 52 and stressful voltage spikes 56, as well as limiting the extent to which the temperature 58 of the third gas tube 36³ increases (problems which might otherwise occur, as shown by way of example in Figure 3(c)).

The control unit 38 may also be programmed to send a turn off signal to the fifth gas tube 36⁵ if the overall control of the converter 10 is not able to react quickly enough to occurrence of the short-circuit fault 46, such that the fifth gas tube 36⁵ is not prevented from turning on and so experiences the same unexpected increase in current flow as the third gas tube 36³ when it does turn on.

Several latching devices 34 may also experience an abnormal current flow, in the form of an unexpected increase in current flow, in the event of a short-circuit fault arising between the first and second DC terminals 16, 18 of the converter 10, e.g. because an associated DC transmission line has experienced a fault.

For example, in the event of a short circuit fault arising between the first and second DC terminals 16, 18, each of the two latching devices 34 that is conducting current at the time, e.g. the first and second gas tubes 36¹, 36² as shown in Figure 2(a) or the first, second and third gas tubes 36¹, 36², 36³ as shown in Figure 2(b), experiences an unexpected increase in current flow.

In the event of such abnormal operating conditions arising the control unit 38 is programmed to send each of the affected latching devices 34, i.e. each of the gas tubes 36¹, 36², 36³ experiencing an unexpected increase in current flow, a turn off signal to actively turn it off and thereby quickly suppress the DC fault current.

The control unit 38 is also programmed to send a turn off signal to a latching device 34 in a situation where it experiences an abnormal flow of current in the form of a flow of current at a time when current should not normally be flowing, such as is caused by a commutation failure in the latching device 34 whereby it fails properly to naturally turn off.

Such a commutation failure, i.e. an inability of the second latching device 34 to sustain forward blocking, might arise if the second latching device 34 is reverse biased for an insufficient amount of time.

More particularly, and with brief reference by way of example to Figure 2(b), the control unit 38 has sent a turn on signal to the third gas tube 36³ whereby the third gas tube 36³ turns on and begins to conduct current while the current flowing through the first gas tube 36¹ begins to fall to zero as the first gas tube 36¹ prepares to naturally turn off.

However, a commutation failure of the first gas tube 36¹, i.e. a failure of the first gas tube 36¹ to naturally turn off, results in current flowing through the first gas tube 36¹ when it should not normally do so.

Such abnormal current flow is identified by the corresponding current detector 40 and reported to the control unit 38 which then sends a turn off signal to the first gas tube 36¹ to actively turn it off and prevent the unwanted flow of current therethrough.

## Claims

1. A line commutated converter (10), for use in high voltage DC power transmission, comprising:
a plurality of converter limbs (12A, 12B, 12C) extending between first and second DC terminals (16, 18), each converter limb (12A, 12B, 12C) including first and second limb portions (22, 24) separated by an AC terminal (26), the first limb portions (22) together defining a first limb portion group (28) and the second limb portions (24) together defining a second limb portion group (30), each limb portion (22, 24) including at least one switching element (32) in the form of a latching device (34), each latching device (34) being configured to turn on and conduct current when it is forward biased and it receives a turn on signal, to naturally turn off and no longer conduct current when it is reverse biased and the current flowing through it falls to zero, and to actively turn off and prevent current from flowing therethrough when it receives a turn off signal; and
a control unit (38) programmed to control switching of the latching devices (34), the control unit (38) during normal operating conditions successively sending a first latching device (34) in a respective pair of first and second latching devices (34) in one of the first limb portion group (28) or the second limb portion group (30) a turn on signal whereby the first latching device (34) turns on and begins to conduct current while the current flowing through the second latching device (34) begins to fall to zero and the second latching device prepares to naturally turn off, and the control unit (38) in the event of abnormal operating conditions arising sending a turn off signal to the or each latching device (34) experiencing an abnormal current flow therethrough to actively turn it off and prevent current from flowing therethrough.

2. A line commutated converter (10) according to Claim 1, wherein one or more of the latching devices (34) is or includes a gas tube (36¹, 36², 36³, 36⁴, 36⁵, 36⁶).

3. A line commutated converter (10) according to Claim 1 or Claim 2, wherein the abnormal current flow experienced by one or more latching devices (34) is an unexpected increase in current flow.

4. A line commutated converter (10) according to Claim 3, wherein the abnormal current flow is caused by a short-circuit fault (46) occurring across a further latching device (34).

5. A line commutated converter (10) according to Claim 3, wherein the abnormal current flow is caused by a short-circuit fault between the first and second DC terminals (16, 18).

6. A line commutated converter (10) according to Claim 1 or Claim 2, wherein the abnormal current flow experienced by one or more latching devices (34) is a flow of current when it should not normally do so.

7. A line commutated converter (10) according to Claim 6, wherein the abnormal current flow is caused by a commutation failure in the or each latching device (34) experiencing the said abnormal current flow whereby it fails properly to naturally turn off.

8. A line commutated converter (10) according to any preceding claim, wherein during a subsequent operating cycle of the or each latching device (34) experiencing an abnormal current flow therethrough the control unit (38) is programmed to allow another attempt to naturally turn off the or each said latching device (34).

9. A line commutated converter (10) according to any preceding claim, wherein each limb portion (22, 24) includes a current detector (40) to identify an abnormal current flow.

10. A line commutated converter (10) according to any preceding claim, wherein one or more limb portions (22, 24) additionally includes a surge arrestor (42) electrically connected in parallel across the or each switching element (32) therein.
